# EUROPÄISCHE PATENTSCHRIFT

(11) **EP 3 207 766 B1**
(45) Veröffentlichungstag und Bekanntmachung des Hinweises auf die Patenterteilung: **13.05.2020**
(21) Anmeldenummer: 15781025.0
(22) Anmeldetag: 09.10.2015
(51) Int. Cl.: H05B 33/08, G06K 19/077

(54) **SICHERES ELEMENT MIT LEUCHTDIODE**
SECURE ELEMENT HAVING A LIGHT EMITTING DIODE
ÉLÉMENT DE SÉCURITÉ POURVU D'UNE DIODE ÉLECTROLUMINESCENTE

(30) Priorität: 16.10.2014 DE 102014015283; 28.09.2015 DE 102015012617
(43) Veröffentlichungstag der Anmeldung: 23.08.2017
(73) Patentinhaber: Giesecke+Devrient Mobile Security GmbH, 81677 München (DE)
(72) Erfinder: KLUGE, Stefan, 80997 München (DE)
(86) Internationale Anmeldenummer: PCT/EP2015/002010
(87) Internationale Veröffentlichungsnummer: WO 2016/058687

(56) Entgegenhaltungen:
- EP-A1- 2 139 109
- WO-A1-2007/069211
- CN-U- 203 118 021
- DE-A1-102007 004 843
- US-A1- 2007 046 468
- US-A1- 2007 108 297
- US-A1- 2010 052 908
- US-B1- 7 317 303

## Beschreibung

Die Erfindung beschreibt ein sicheres Element, wie z.B. eine Chipkarte, welche eine Leuchtdiode, abgekürzt mit LED, aufweist. Das sichere Element ist insbesondere für eine kontaktlose Datenübertragung eingerichtet und weist dazu eine Spule auf, die sowohl zur Energie- als auch zur Datenübertragung zwischen einem Chip, z.B. einen Securitycontroller, des sicheren Elements und einem externen Terminal, z.B. ein Kontaktloslesegerät, dient.

In der Regel beträgt die maximal zulässige Spannung in Sperrichtung einer LED ca. 5 Volt. Falls die LED an einer eigenen zweiten Spule betrieben wird, die nicht mit einem Chip des sicheren Elements verbunden ist, so muss darauf geachtet werden, dass die von der zweiten Spule zur Verfügung gestellte Spannung in Sperrichtung der LED begrenzt wird, damit die LED bei einer zu hohen Spannung in Sperrichtung nicht zerstört wird. Um dies zu vermeiden, wird in der Regel eine zweite LED antiparallel zur ersten LED geschaltet. Antiparallel bedeutet, dass die erste und die zweite LED zwar elektrisch parallel miteinander verbunden sind, aber die Durchlassrichtung jeder LED unterschiedlich ist. Nachteilig an dieser Lösung ist der höhere Stromverbrauch durch die zweite LED und die Kosten für die zweite LED.

US 2007/108297 A1 beschreibt eine Smartcard, die aus einem elektromagnetischen Feld induzierte Spannung gleichrichtet und damit Energie zum Betrieb einer Last zur Verfügung stellt.

DE 10 2007 004 843 A1 beschreibt eine Vorrichtung zum Bereitstellen einer Versorgungsspannung und einer Lastmodulation in einem Transponder. WO 2007/069 211 A1 beschreibt ein RFID-Tag mit einem Gleichrichter und einer Last aus Widerständen, wobei die Last als eine Modulations- und Spannungsreglerschaltung wirkt.

CN203118021U und US 2007/046468 A1 beschreiben ein RFID-Tag mit einer LED.

Ausgehend vom Stand der Technik ist es Aufgabe der Erfindung eine Lösung zu finden, welche den beschriebenen Nachteil vermeidet.

Die Aufgabe der Erfindung wird durch den unabhängigen Anspruch gelöst. Vorteilhafte Ausführungen sind in den abhängigen Ansprüchen beschrieben.

Ein weiteres Ausführungsbeispiel ist, dass die minimale Betriebsspannung, die für den Betrieb der integrierten Schaltung notwendig ist, kleiner ist, als die Spannung, die in Durchflußrichtung an der Diode abfällt.

Damit ist sicher gestellt, dass für den Betrieb der integrierten Schaltung immer genügend Energie zur Verfügung steht. Oder anders ausgedrückt: zuerst nimmt die integrierte Schaltung ihren Betrieb auf und danach, wenn genügend Energie von der Spule zur Verfügung gestellt wird, die Leuchtdiode, damit die Leuchtdiode der integrierten Schaltung keine zum Betrieb notwendige Energie wegnimmt, wenn nur ein schwaches elektromagnetisches Feld vom Terminal zur Verfügung steht, wobei des elektromagnetische Feld umso schwächer wird, je weiter sich das sichere Element vom Terminal entfernt befindet.

Ein weiteres vorteilhaftes Ausführungsbeispiel ist, dass der Leuchtdiode mindestens ein elektronisches Bauelement in Reihe geschaltet wird, um den Spannungsabfall am Stromzweig, der die Leuchtdiode enthält, zu vergrößern.

Somit geht man sicher, dass die Leuchtdiode erst dann leuchtet, wenn die integrierte Schaltung ausreichend Energie für ihren Betrieb hat. Darüber hinaus können als elektronisches Bauelement unterschiedliche Typen von Dioden verwendet werden, wie z.B. normale Dioden, Zenerdioden, Leuchtdioden, Schottky-Dioden etc., um einen ausreichend hohen Spannungsabfall zu erreichen.

Ein weiteres vorteilhaftes Ausführungsbeispiel ist, dass zusätzlich zu einer Diode als elektronisches Bauelement ein ohmscher Widerstand zur Strombegrenzung der Leuchtdiode in Serie geschalten wird.

Ferner kann durch den ohmschen Widerstand der durch die Leuchtdiode fließende Strom begrenzt und damit die Helligkeit der Leuchtdiode eingestellt werden.

Ein weiteres vorteilhaftes Ausführungsbeispiel ist, dass ein Schaltelement verwendet wird, um die Leuchtdiode ein oder aus zu schalten. Das Schaltelement kann ganz allgemein als ein ohmscher Widerstand betrachtet werden, welcher im offenen Zustand hochohmig und im geschlossenen Zustand niederohmig ist. Somit kann der Schalter auch durch jede andere geeignete Schaltung realisiert werden, welche das oben beschriebene Verhalten aufweist.

Ein weiteres vorteilhaftes Ausführungsbeispiel ist, dass das Schaltelement entweder in der integrierten Schaltung integriert oder als eigenes Bauelement vorhanden ist.

Ein weiteres vorteilhaftes Ausführungsbeispiel ist, dass das Schaltelement durch die integrierte Schaltung aktiviert wird oder sich selbst aktiviert.

Ein weiteres vorteilhaftes Ausführungsbeispiel ist, dass sich das Schaltelement durch eine Zeitsteuerung selbst aktiviert.

Ein weiteres vorteilhaftes Ausführungsbeispiel ist, dass das Schaltelement verwendet wird, um die Leuchtdiode gepulst zu betreiben.

Somit kann die Helligkeit der Leuchtdiode neben dem oben genannten ohmschen Widerstand, welcher eine statische Regelung darstellt, auch durch das Schaltelement dynamisch geregelt werden.

Ein weiteres vorteilhaftes Ausführungsbeispiel ist, dass der Shunt-Regler in der integrierten Schaltung integriert ist oder eine von der integrierten Schaltung getrennte Einheit bildet.

Ein weiteres vorteilhaftes Ausführungsbeispiel ist, dass der Shunt-Regler ein spannungsabhängiger Widerstand ist, wobei dieser durch ein elektronisches Bauelement oder eine elektronische Schaltung realisiert wird.

Ein weiteres vorteilhaftes Ausführungsbeispiel ist, dass als sicheres Element ein tragbarer Datenträger, wie z.B. eine Chipkarte, Kreditkarte, Personalausweis, SIM-Karte etc., verwendet wird.

Im Folgenden werden Ausführungsbeispiele der Erfindung anhand der beigefügten Figuren beschrieben.
Figur 1 zeigt eine erfindungsgemäße Schaltung.
Figur 2 zeigt die erfindungsgemäße Schaltung ergänzt durch einen Schalter, der durch die integrierte Schaltung betätigt wird.
Figur 3 zeigt die erfindungsgemäße Schaltung ergänzt durch einen Schalter, der unabhängig von der integrierten Schaltung zeitgesteuert schaltet.
Figur 4 zeigt die erfindungsgemäße Schaltung, wobei ein Schalter in der integrierten Schaltung enthalten ist.

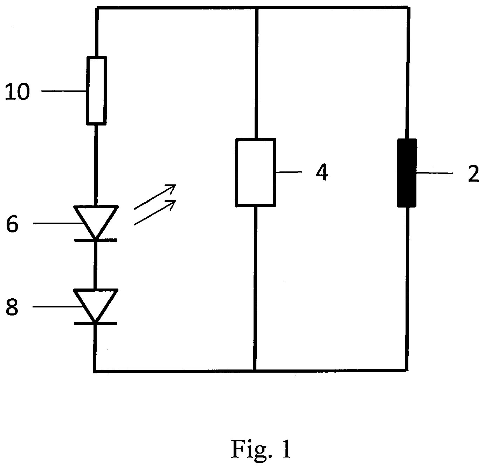

Figur 1 zeigt die erfindungsgemäße Schaltung. Die Schaltung besteht aus einer Parallelschaltung einer Spule 2 und einer integrierten Schaltung 4, z.B. ein RFID-Chip, wobei die integrierte Schaltung 4 über ihre Betriebsspannungsanschlüsse mit der Spule 2 verbunden ist. In der Spule 2 wird durch ein externes elektromagnetisches Feld eines Terminals eine Spannung induziert. Die induzierte Spannung in der Spule 2 dient zur Energieversorgung der Schaltung. Ferner dient die Spule 2 auch zur kontaktlosen Datenübertragung zwischen der integrierten Schaltung 4 und dem nicht dargestellten Terminal. Prinzipiell kann auch eine kontaktgebundene Schnittstelle vorhanden sein, die aber aus Gründen der Übersichtlichkeit nicht dargestellt ist. Parallel zur integrierten Schaltung 4 ist eine Reihenschaltung dargestellt, die aus einer Leuchtdiode 6, einer Diode 8 und einem ohmschen Widerstand 10 besteht, wobei es sich bei der Diode 8 und beim Widerstand 10 um optionale Bauelemente handelt. Wesentlich für die Erfindung sind die Spule 2, die integrierte Schaltung 4 und die Leuchtdiode 6.

Zur Vermeidung von zu hohen Spannungen in Sperrichtung an der Leuchtdiode 6, welche zur Zerstörung der Leuchtdiode 6 führen können, regelt erfindungsgemäß ein Shunt-Regler, der nicht dargestellt ist, aber üblicherweise in der integrierten Schaltung 4 enthalten ist, die Betriebsspannung der integrierten Schaltung 4 auf einen Wert, damit ein störungsfreier Betrieb möglich ist und eine zu hohe Spannung in Sperrichtung der Leuchtdiode 6 verhindert wird.

In einer Ausführungsform ist es wichtig, dass für den Betrieb der integrierten Schaltung 4 ausreichend Energie vorhanden ist, und nicht für den Betrieb der Leuchtdiode 6. Das bedeutet, dass bei Annäherung der erfindungsgemäßen Schaltung an ein Terminal mit einem elektromagnetischen Feld zuerst die integrierte Schaltung 4 ausreichend Energie zur Verfügung gestellt bekommt, um ihren Betrieb aufzunehmen. Bei weiterer Annäherung der erfindungsgemäßen Schaltung an das Terminal, verbunden mit einer Erhöhung der zur Verfügung stehenden Energie und letztlich auch einer Erhöhung der Spannung, die von der Spule 2 zur Verfügung gestellt wird, steht in Abhängigkeit von der Durchlasspannung der Leuchtdiode ab einem bestimmten Abstand zum Terminal ausreichend elektrische Energie zur Verfügung, damit die Leuchtdiode leuchtet. Der Wert der Durchlasspannung der Leuchtdiode 6 hängt dabei von ihrer abgestrahlten Wellenlänge bzw. Lichtfarbe und Material der Leuchtdiode 6 ab. Es kann somit nicht vorkommen, dass die integrierte Schaltung 4 ihren Betrieb nicht aufnehmen kann, insbesondere bei einem schwachen elektromagnetischen Feld z.B. in einem großen Abstand zum Terminal, weil die Energie von der Leuchtdiode 6 verbraucht wird. Dies kann erreicht werden durch eine Leuchtdiode 6 mit einer möglichst hohen Durchflußspannung in Vorwärtsrichtung.

Die Diode 8 dient dazu den Spannungsunterschied zwischen der Leuchtdiode 6 und der integrierten Schaltung 4 weiter zu erhöhen und somit sicherzustellen, dass zuerst die integrierte Schaltung 4 ausreichend Energie zur Aufnahme ihres Betriebs erhält, bevor die Leuchtdiode 6 zu leuchten beginnt. Bei der Diode 8 kann es sich z.B. um eine normale Diode, eine Zenerdiode, eine Leuchtdiode oder jede andere geeignete Diode handeln. Auch andere Bauelemente und Schaltungen sind möglich, welche den gleichen Zweck wie die Diode 8 erfüllen. Zur Diode 8 können nach Bedarf auch weitere Dioden in Serie geschaltet werden, was nicht dargestellt ist.

Der ohmsche Widerstand 10 dient zur Strombegrenzung und damit zur Einstellung der Helligkeit der Leuchtdiode 6, indem der fließende elektrische Strom begrenzt wird. Der Widerstand 10 kann dabei Werte von z.B. bis zu 1000 Ohm aufweisen. Als Bauform sind alle geeigneten Bauformen denkbar, wie z.B. als diskretes Bauteil in SMD-Bauform oder als gedruckte Leiterbahn mit verteiltem Widerstand.

Die Spule 2 besteht in einer vorteilhaften Ausführungsform aus mindestens zwei einzelnen Spulen, wobei in mindestens einer der beiden Spulen ein Ferrit angeordnet ist. Die beiden Spulen sind für dieselbe Resonanzfrequenz ausgelegt. Dabei kann eine der Spulen zur Versorgung der integrierten Schaltung 4 und die andere Spule zur Versorgung einer Last verwendet werden. Als Last kommt beispielsweise eine Heizspule für thermochrome Farben zur Sichtbarmachung von in der Karte enthaltener Informationen, zum Beispiel zur Personalisierung, oder mindestens ein Leuchtmittel, zum Beispiel eine LED, OLED, oder eine andere funktionale Last infrage.

Das Ferrit ermöglicht, dass vom Terminal eine Spule mit einer geringeren Ansprechfeldstärke angesprochen, bzw. aktiviert werden kann, als dies ohne Ferrit möglich wäre. Somit kann eine Optimierung der Ansprechfeldstärke mindestens einer Spule nach Vorgabe von Normen oder eines Kundenwunsches erfolgen. Beispielsweise muss eine RFID-Funktionalität einschlägige Normen erfüllen, wobei die LED 6 nachrangig behandelt werden kann. Somit ermöglicht das Ferrit es, dass eine einzelne Spule unabhängig von der jeweils umschlossenen Fläche der jeweiligen Spule und unabhängig von der anderen Spule mit Energie versorgt werden kann, wobei gleichzeitig die Ansprechfeldstärke der jeweiligen Spule reduziert ist bzw. das Terminal mit einer geringeren Feldstärke arbeiten kann, um die jeweilige Spule mit Energie für den Betrieb der integrierten Schaltung 4 oder einer funkionalen Last zu versorgen.

Die Spulen können so angeordnet werden, dass sie in einer gemeinsamen oder in unterschiedlichen Ebenen der Karte angeordnet sind. Die Spulen können als sich teilweise oder vollständig überlappende Spulen, nebeneinander angeordnete Spulen oder ineinander angeordnete Spulen angeordnet sein.

Die beiden Spulen können gleich oder unterschiedlich groß sein. Das bedeutet, dass eine Spule die gesamte Fläche der Karte umschließt, z.B. eine so genannte Full Size Coil, oder eine Spule nur einen Teil der gesamten Fläche der Karte umschließt, z.B. eine so genannte Half Size Coil.

Die Spulen können einlagig oder mehrlagig ausgebildet sein. Beispielsweise kann eine der Spulen einlagig und die andere zweilagig sein. Bei einer mehrlagigen Spule ist z.B. zwischen den Windungen der Spule eine Isolationsschicht angeordnet.

Bei mehr als einer Spule müssen die Spulen nicht unbedingt auf derselben Seite eines Substrats, z.B. einer inneren Folienlage einer Karte, oder auf dem selben Substrat angeordnet sein, sondern können auf unterschiedlichen Seiten des Substrats oder auf unterschiedlichen Substraten angeordnet sein.

Die beiden Spulen weisen jeweils mindestens eine Windung auf, wobei die beiden Spulen eine gleiche oder eine unterschiedliche Anzahl von Windungen aufweisen können.

Das Ferrit kann als Folie oder mittels eines Druckprozesses oder auf eine andere geeignete Art und Weise innerhalb einer Spule angeordnet werden. Durch die Anordnung eines Ferrits in mindestens einer der beiden Spulen wird die Spule, innerhalb der das Ferrit angeordnet ist, bevorzugt mit Energie versorgt, da das Ferrit quasi die Feldlinien sammelt.

Auch ist durch die Variation der Geometrie und der elektromagnetischen Eigenschaften, zum Beispiel die Auswahl des Materials bzw. der Verarbeitungsparameter, z. B. beim Verdrucken, des Ferrits die Anpassung der Resonanzfrequenz und anderer elektrischer Eigenschaften der jeweiligen Spule möglich. Das Ferrit kann dabei kleiner als die jeweilige Spule sein, innerhalb der das Ferrit angeordnet ist, von ähnlicher Größe oder auch größer als die zugehörige Spule sein.

Die Anordnung des Ferrits in der Karte ist im Prinzip unabhängig von der Lage der Spulen. Das Ferrit kann auf derselben Substratoberfläche wie eine der Spulen angeordnet sein oder auf einer Rückseite des Substrats oder auch auf einer anderen Folienlage innerhalb der Karte angeordnet sein. Ferner kann das Ferrit auch außen auf der Karte aufgebracht werden. Die vorteilhafte Wirkung des Ferrits ist, dass das Ferrit das Verhältnis der Induktivitäten der beiden Spulen beeinflusst, so dass eine Ansprechfeldstärke einer Spule, innerhalb der das Ferrit angeordnet ist, verringert und damit verbessert wird.

Als weiteres vorteilhaftes Ausführungsbeispiel bietet es sich an, dass die LED 6 mit optischen Glitzerkörpern kombiniert wird. Bei der Verwendung in Chipkarten können eingebrachte optische Glitzerkörper, z.B. reflektierende Metall- oder Glimmerpartikeln, zum Beispiel Pigmente bevorzugt in Form kleiner Flocken, ein optisch sichtbares Bild ergeben, dadurch dass die Flocken ein helles Aufleuchten mit einem so genannten Glitzereffekt, d.h. einer punktuellen optischen Reflexion anstatt einer flächigen, optischen Streuung, ergeben.

Durch die Verwendung der LED 6 als Punktlichtquelle innerhalb der Karte in Verbindung mit den Glitzerkörpern ergeben sich hell aufleuchtende Punkte. Tageslicht oder Kunstlicht stellen jeweils eine diffuse optische Lichtquelle dar, welche nur diffuse optische Reflexe mit einer sehr geringen optischen Intensität erzeugen. Es ergibt sich somit ein deutlich unterschiedliches Bild durch aktive Beleuchtung mittels der LED 6 der Karte im Vergleich zu einer diffusen optischen Lichtquelle, wie sie zum Beispiel das Tageslicht darstellt. Damit ist die Kombination bestehend aus der LED 6 in der Karte und Glitzerkörpern als Sicherheitsmerkmal geeignet.

Als eine weitere erfindungsgemäße Ausprägung kann einem transparenten Kartenmaterial mit reflektierenden Metall- oder Glitzerpartikeln auch noch ein Fluoresenzfarbstoff beigegeben werden zur Umwandlung von Licht der eingebauten LED 6 in ein Licht mit größerer Wellenlänge, welches von einem Betrachter von außen zu erkennen ist.

In einer weiteren Ausprägung besitzen die optischen Glitzerkörper oder Streukörper einen anderen Brechungsindex als das sie umgebende Kartenmaterial um optische Effekte, wie zum Beispiel Reflexion, Brechung oder Streuung, zu erzielen. Die optischen Glitzerkörper oder Streukörper können als Sicherheitsmerkmal, zum Beispiel als Sicherheitsstreifen, oder als ein optisch auffälliger Effekt verwendet werden.

Die optischen Glitzerkörper können vor einem letzten Schritt zur Herstellung der Karte, z.B. mittels Laminierung, auf mindestens eine Folie aufgetragen werden, wobei die Folien nach der Herstellung der Karte beispielsweise im Inneren der Karte angeordnet ist. Die optischen Glitzerkörper können vollflächig mittels einer Beschichtung oder nur teilflächig zum Beispiel mittels eines Druckverfahrens auf die Folie aufgebracht werden.

Als weiteres Ausführungsbeispiel können die optischen Glitzerkörper, zum Beispiel in ein Material einer Folie integriert werden, zum Beispiel mittels Zugabe der optischen Glitzerkörper in einen Extruder zur Herstellung der Folie. Die Folie mit den integrierten optischen Glitzerkörpern kann später ganzflächig oder in der Form von Streifenfolien mit den integrierten optischen Glitzerkörper in einer beliebigen Orientierung in der Karte angeordnet werden, wobei die bevorzugte Ausrichtung in Längs- oder Querrichtung ist. Als optische Glitzerkörper können ferner folgende Materialien verwendet werden, wie z.B. Glasfaserschnitzel, sogenannte Microfiber, Kugeln aus Glas oder Kunststoff, die voll oder hohl sind. Dabei weisen insbesondere Hohlkugeln durch die eingeschlossene Luft einen starken optischen Effekt auf. Je kleiner der Kugeldurchmesser ist, desto höher ist die Stabilität, wobei der optische Effekt bei einem größeren Durchmesser besser wird. Beispielsweise liegt der Durchmesser der Kugeln im Bereich von 1 bis 200 µm.

Allgemein kann das eingebrachte Material in Form von optischen Glitzerkörpern auch farbig sein, d.h. entweder es ist nur an der Oberfläche farbig oder das Material ist insgesamt farbig. Mögliche weitere beispielhafte Varianten sind, dass das Material einfarbig oder mehrfarbig ist und/oder transparent und gleichzeitig UV-fluoreszierend ist.

Für den Fall, dass Hohlkugeln verwendet werden, so können diese Hohlkugeln auch mit einer magnetischen Farbe gefüllt sein, wie zum Beispiel E-Ink. Die Füllung der Kugel kann dabei aus einer farbigen Flüssigkeit bestehen und elektrisch geladene oder magnetische Nanopartikel einer anderen Farbe enthalten. Somit erhält man ein von extern oder intern schaltbares Sicherheitsmerkmal.

In der fertigen Karte können die eingebrachten Materialien in Form von optischen Glitzerkörpern von einem Betrachter zu erkennen sein. Die optischen Glitzerkörper können von einer oder von beiden Seiten der Karte zu erkennen sein, wenn die Glitzerkörper in unbedruckten Bereichen der Karte angeordnet sind und von einer Kartenrückseite Licht durch die Karte hindurch scheint. Ferner können die eingebrachten Materialien in Form von Glitzerkörpern in der fertigen Karte in einer bedruckten Fläche zu erkennen sein, wenn Licht einer Lichtquelle unter der bedruckten Fläche hindurch scheint. Dies ist zum Beispiel der Fall, wenn die LED 6 unter einer bedruckten Kartenfläche angeordnet ist. Alternativ sind die eingebrachten Glitzerkörper auf der Vorder- oder Rückseite der Karte zu erkennen. Als eine weitere Alternative sind die optischen Glitzerkörper auf einer Kante der Karte zu erkennen, wenn z.B. von außen Licht in einen Lichtleiter der Karte eingekoppelt wird und das Licht über den Lichtleiter zu einer anderen Seite übertragen und dort wieder ausgekoppelt wird.

In einer fertigen Karte können die eingebrachten Materialien in Form von optischen Glitzerkörpern somit sichtbar sein bei Betrachtung im Durchlicht, bei Betrachtung im Auflicht, durch Aktivierung einer im Kartenkörper vorhandenen Lichtquelle, zum Beispiel der LED 6 oder durch im Kartenkörper vorhandenes Licht, welches zum Beispiel in transparente Schichten oder Bereiche eingekoppelt und weitergeleitet wird, wobei das Licht z.B. mittels flächiger oder streifenförmiger Lichtleiter weitergeleitet wird.

Als Lichtleiter können Streifenfolien verwendet werden. Die Streifenfolien können dabei eine oder mehrere Lagen aufweisen. Ferner können identische Streifenfolien parallel oder in einem Winkel, zum Beispiel gekreuzt, in der Karte verlegt werden. Des weiteren können Streifenfolien verlegt werden, welche sowohl optische Glitzerkörper enthalten, als auch keine optischen Glitzerkörper enthalten. Dabei sind die Streifenfolien, welche optische Glitzerkörper enthalten zumindest teiltransparent, wobei die Streifenfolien ohne optischen Glitzerkörper opak oder transparent sind. Ferner besteht die Möglichkeit, dass im Bereich, wo sich die Streifenfolien kreuzen, auf der Kartenoberfläche ein Betrachtungsfenster gebildet wird. Alternativ kann ein Betrachtungsfenster auch im Kantenbereich gebildet werden.

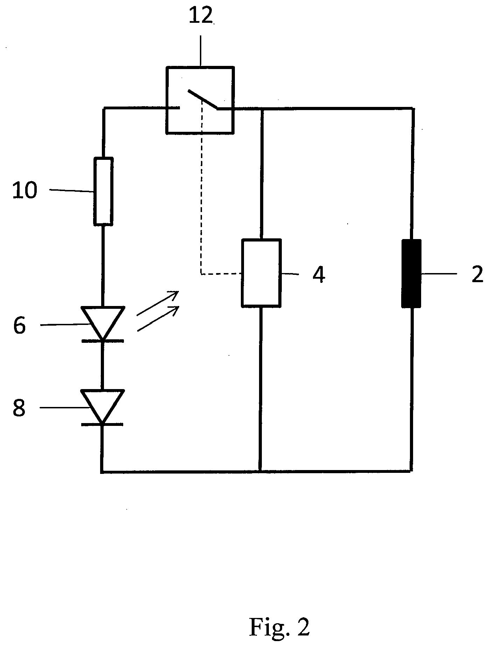

Figur 2 zeigt die erfindungsgemäße Schaltung ergänzt durch einen Schalter 12, der durch die integrierte Schaltung 4 betätigt wird. Der Schalter 12 ist hier als eigenes Bauelement dargestellt, das durch ein Signal der integrierten Schaltung 4 betätigt bzw. aktiviert wird. Der Schalter 12 wird z.B. von der integrierten Schaltung 4 betätigt, sobald die integrierte Schaltung 4 ihren Betrieb aufgenommen hat und genügend Energie zur Verfügung steht, um auch die Leuchtdiode zu betreiben oder um z.B. ein Ergebnis einer Verarbeitung durch die Leuchtdiode 6 anzeigen zu lassen.

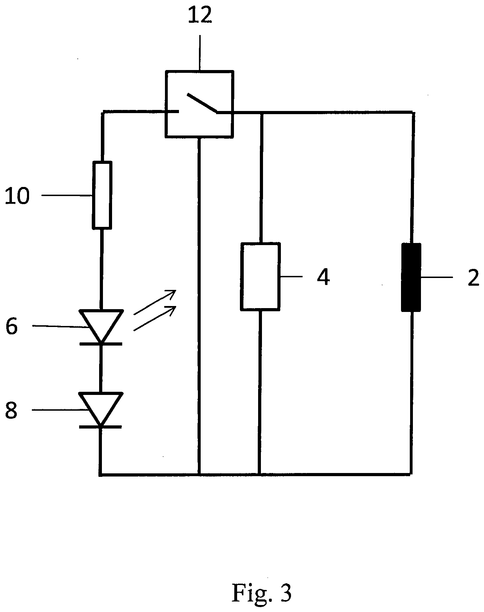

Figur 3 zeigt die erfindungsgemäße Schaltung ergänzt durch einen Schalter 12, der unabhängig von der integrierten Schaltung 4, z.B. zeitgesteuert schaltet.

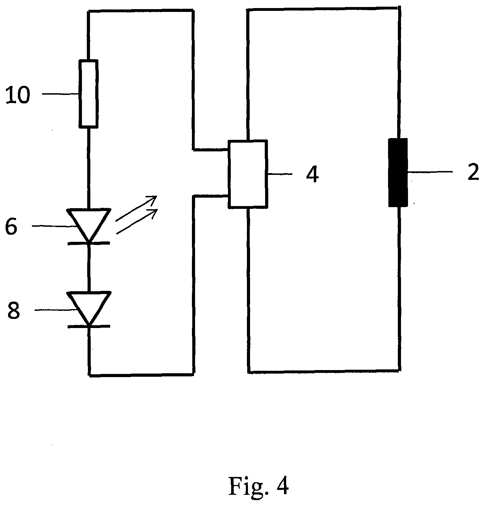

Figur 4 zeigt die erfindungsgemäße Schaltung, wobei ein Schalter 12 in der integrierten Schaltung 4 enthalten ist.

Es gibt nun unterschiedlichen Anwendungsfälle für die erfindungsgemäße Schaltung mit einem Schalter 12.

Im Fall einer automatischen Transaktionsbestätigung wird die gesamte kontaktlos empfangene Energie zunächst dazu verwendet, dass die integrierte Schaltung 4, z.B. ein RFID-Chip, eine Transaktion durchführt. Da die gesamte kontaktlos empfangene Energie die integrierte Schaltung 4 erhält, kann die Entfernung zwischen der erfindungsgemäßen Schaltung und einem Terminal maximiert werden.

Nach Abschluß der Transaktion wird über den Schalter 12 die Leuchtdiode 6 aktiviert und damit die abgeschlossene Transaktion angezeigt. Der Schalter 12 kann dabei entweder von der integrierten Schaltung 4 direkt betätigt werden oder nach Ablauf einer bestimmten Zeit, die z.B. in einschlägigen Normen als maximale Transaktionszeit erlaubt ist, unabhängig von der integrierten Schaltung 4.

In einem anderen Anwendungsfall wird über ein Leuchten der Leuchtdiode 6 signalisiert, dass sich die erfindungsgemäße Schaltung, die auf einem sicheren Element, z.B. eine Kreditkarte, angeordnet ist, in einem elektromagnetischen Feld eines Terminals befindet. Bei Betätigung eines Schalters 12, welcher sich in dem sicheren Element befindet und von einem Benutzer betätigt wird, erhält die integrierte Schaltung 4 die notwendige Energie um eine Transaktion auszuführen. Während der Ausführung der Transaktion wird die Leuchtdiode 6 durch die integrierte Schaltung 4 abgeschaltet, damit sicher gestellt ist, dass sich die integrierte Schaltung 4 und die Leuchtdiode 6 nicht die zur Verfügung stehende Energie teilen müssen.

Die Leuchtdiode 6 steht hier als Beispiel für alle anderen möglichen Arten für eine Last, wie z.B. eine Elektrolumineszenzanzeige oder einen Heizwiderstand.

In einer besonderen Anwendung kann der Schalter 12 benutzt werden, um die Leuchtdiode 6 gepulst zu betreiben. Dies ist dann möglich, wenn der strombegrenzende Widerstand 10 entsprechend niedrig gewählt wird und die Leuchtdiode 6 gepulst betrieben wird, indem der Schalter 12 mit hoher Frequenz geöffnet und geschlossen wird. Das menschliche Auge nimmt dann das Licht der Leuchtdiode 6 heller wahr, als es dies bei gleichem Energieverbrauch im nicht gepulsten Betrieb wahrnimmt. Durch den gepulsten Betrieb der Leuchtdiode 6 kann somit entweder Energie gespart werden bei gleicher vom menschlichen Auge wahrgenommene Helligkeit der Leuchtdiode 6, wobei dann mehr Energie für die integrierte Schaltung zur Verfügung steht, oder bei gleichem Energieverbrauch kann die vom menschlichen Auge wahrgenommene Helligkeit der Leuchtdiode 6 erhöht werden.

Ferner kann durch geeignete Anpassung der zeitlichen Länge von Impulsdauer und Impulspause trotz unterschiedlicher Entfernung zum Terminal und damit verbundener unterschiedlicher elektromagnetischer Feldstärke die Helligkeit der Leuchtdiode 6 so geregelt werden, dass die Helligkeit vom menschlichen Auge in einem bestimmten Entfernungsbereich der Karte vom Terminal stets als gleich hell wahrgenommen wird.

### Bezugszeichenliste

- 2: Spule
- 4: integrierte Schaltung, z.B. ein RFID-Chip
- 6: Leuchtdiode
- 8: Diode
- 10: ohmscher Widerstand
- 12: Schaltelement

## Patentansprüche

1. Verfahren zur Begrenzung einer Spannung in Sperrichtung einer Leuchtdiode (6), die sich auf einem sicheren Element befindet,
wobei das sichere Element eine Chipkarte ist,
wobei die Leuchtdiode (6) elektrisch parallel verbunden ist mit einer Spule (2) und mit Betriebsspannungsanschlüssen einer integrierten Schaltung (4),
wobei die Spule (2) sowohl zur Energieversorgung der integrierten Schaltung (4) und der Leuchtdiode (6) dient, indem mittels eines elektromagnetischen Feldes, welches durch ein externes Terminal erzeugt wird, in der Spule (2) eine elektrische Spannung induziert wird, als auch zur kontaktlosen Datenübertragung zwischen der integrierten Schaltung (4) und dem Terminal dient,
wobei die integrierte Schaltung (4) zur Verarbeitung von Daten dient, welche zwischen dem Terminal und der integrierten Schaltung (4) übertragen werden,
**dadurch gekennzeichnet, dass**
ein Shunt-Regler die für den Betrieb der integrierten Schaltung (4) notwendige Betriebsspannung auf einen Wert innerhalb eines zulässigen Bereichs regelt und dadurch begrenzt, so dass eine maximal erlaubte Spannung in Sperrichtung der Leuchtdiode (6) nicht überschritten wird,
wobei die Durchlassspannung der Leuchtdiode (6) höher ist als die Betriebsspannung der integrierten Schaltung (4).

2. Verfahren nach Anspruch 1, **dadurch gekennzeichnet, dass** der Leuchtdiode (6) mindestens ein elektronisches Bauelement (8) in Reihe geschaltet wird, um den Spannungsabfall am Stromzweig, der die Leuchtdiode (6) enthält, zu vergrößern.

3. Verfahren gemäß den Ansprüchen 1 bis 2, **dadurch gekennzeichnet, dass** zusätzlich zum elektronischen Bauelement (8) ein ohmscher Widerstand (10) zur Strombegrenzug der Leuchtdiode (6) in Serie geschalten wird.

4. Verfahren gemäß den Ansprüchen 1 bis 3, **dadurch gekennzeichnet, dass** ein Schaltelement (12) verwendet wird, um die Leuchtdiode (6) ein oder aus zu schalten.

5. Verfahren gemäß den Ansprüchen 1 bis 4, **dadurch gekennzeichnet, dass** das Schaltelement (12) entweder in der integrierten Schaltung (4) integriert oder als eigenes Bauelement vorhanden ist.

6. Verfahren gemäß den Ansprüchen 1 bis 5, **dadurch gekennzeichnet, dass** das Schaltelement (12) durch die integrierte Schaltung (4) aktiviert wird oder sich selbst aktiviert.

7. Verfahren gemäß den Ansprüchen 1 bis 6, **dadurch gekennzeichnet, dass** sich das Schaltelement (12) durch eine Zeitsteuerung selbst aktiviert.

8. Verfahren gemäß den Ansprüchen 1 bis 7, **dadurch gekennzeichnet, dass** das Schaltelement (12) verwendet wird, um die Leuchtdiode (6) gepulst zu betreiben.

9. Verfahren gemäß den Ansprüchen 1 bis 8, **dadurch gekennzeichnet, dass** der Shunt-Regler in der integrierten Schaltung (4) integriert ist oder eine von der integrierten Schaltung getrennte Einheit bildet.

10. Verfahren gemäß den Ansprüchen 1 bis 9, **dadurch gekennzeichnet, dass** der Shunt-Regler ein spannungsabhängiger Widerstand ist.

## Claims

1. A method for limiting a voltage in the reverse direction of a light emitting diode (6) which is disposed on a secure element,
wherein the secure element is a chip card,
wherein the light emitting diode (6) is electrically connected in parallel to a coil (2) and to operating voltage connectors of an integrated circuit (4),
wherein the coil (2) serves both for supplying energy to the integrated circuit (4) and to the light emitting diode (6) in that an electrical voltage is induced in the coil (2) by means of an electromagnetic field produced by an external terminal, and for contactless data transmission between the integrated circuit (4) and the terminal,
wherein the integrated circuit (4) serves for processing data which are transmitted between the terminal and the integrated circuit (4), **characterized in that**
a shunt regulator regulates the operating voltage required for the operation of the integrated circuit (4) to a value within an allowable range and limits said operating voltage thereby, so that a maximally permissible voltage in the reverse direction of the light emitting diode (6) is not exceeded,
wherein the conducting state voltage of the light emitting diode (6) is higher than the operating voltage of the integrated circuit (4).

2. The method according to claim 1, **characterized in that** to the light emitting diode (6) at least one electronic component (8) is connected in series in order to increase the voltage drop at the current branch containing the light emitting diode (6).

3. The method according to claims 1 to 2, **characterized in that** in addition to the electronic component (8) an ohmic resistor (10) is connected in series for the current limitation of the light emitting diode (6).

4. The method according to claims 1 to 3, **characterized in that** a switching element (12) is employed to switch the light emitting diode (6) on or off.

5. The method according to claims 1 to 4, **characterized in that** the switching element (12) is either integrated in the integrated circuit (4) or is present as a separate component.

6. The method according to claims 1 to 5, **characterized in that** the switching element (12) is activated by the integrated circuit (4) or activates itself.

7. The method according to claims 1 to 6, **characterized in that** the switching element (12) activates itself through a time control.

8. The method according to claims 1 to 7, **characterized in that** the switching element (12) is employed to operate the light emitting diode (6) in pulsed fashion.

9. The method according to claims 1 to 8, **characterized in that** the shunt regulator is integrated in the integrated circuit (4) or forms a unit that is separate from the integrated circuit.

10. The method according to claims 1 to 9, **characterized in that** the shunt regulator is a voltage-dependent resistor.

## Revendications

1. Procédé de limitation d'une tension dans le sens de non-conduction d'une diode électroluminescente (6) qui se trouve sur un élément sécurisé,
cependant que l'élément sécurisé est une carte à puce,
cependant que la diode électroluminescente (6) est reliée électriquement en parallèle avec une bobine (2) et avec des bornes de tension de fonctionnement d'un circuit intégré (4),
cependant que la bobine (2) sert tant à l'alimentation en énergie du circuit intégré (4) et de la diode électroluminescente (6), ce qui a lieu en ce que, au moyen d'un champ électromagnétique, généré par un terminal externe, une tension électrique est induite dans la bobine (2), qu'à la transmission de données sans contact entre le circuit intégré (4) et le terminal,
cependant que le circuit intégré (4) sert au traitement de données qui sont transmises entre le terminal et le circuit intégré (4),
**caractérisé en ce que**
un régulateur shunt régule sur une valeur comprise dans une plage admissible la tension de fonctionnement nécessaire au fonctionnement du circuit intégré (4) et la limite ainsi, de telle sorte qu'une tension maximale autorisée dans le sens de non-conduction de la diode électroluminescente (6) n'est pas dépassée,
cependant que la tension avant de la diode électroluminescente (6) est supérieure à la tension de fonctionnement du circuit intégré (4).

2. Procédé selon la revendication 1, **caractérisé en ce que**, à la diode électroluminescente (6), au moins un composant électronique (8) est connecté en série afin d'augmenter la chute de tension à la branche de courant qui contient la diode électroluminescente (6).

3. Procédé selon les revendications de 1 à 2, **caractérisé en ce que**, en plus du composant électronique (8), une résistance ohmique (10) est connectée en série pour la limitation de courant de la diode électroluminescente (6).

4. Procédé selon les revendications de 1 à 3, **caractérisé en ce qu'**un élément de commutation (12) est utilisé pour activer ou désactiver la diode électroluminescente (6).

5. Procédé selon les revendications de 1 à 4, **caractérisé en ce que** l'élément de commutation (12) est soit intégré dans le circuit intégré (4), soit disponible en tant que propre composant.

6. Procédé selon les revendications de 1 à 5, **caractérisé en ce que** l'élément de commutation (12) est activé par le circuit intégré (4) ou s'active lui-même.

7. Procédé selon les revendications de 1 à 6, **caractérisé en ce que** l'élément de commutation (12) s'active lui-même par une commande temporelle.

8. Procédé selon les revendications de 1 à 7, **caractérisé en ce que** l'élément de commutation (12) est utilisé pour faire fonctionner la diode électroluminescente (6) en mode pulsé.

9. Procédé selon les revendications de 1 à 8, **caractérisé en ce que** le régulateur shunt est intégré dans le circuit intégré (4) ou constitue une unité distincte du circuit intégré.

10. Procédé selon les revendications de 1 à 9, **caractérisé en ce que** le régulateur shunt est une résistance dépendante de la tension.
